(19) **Europäisches Patentamt**

**European Patent Office**

**Office européen des brevets**

(11) **EP 1 176 791 B1**

(12) **FASCICULE DE BREVET EUROPEEN**

(45) Date de publication et mention
de la délivrance du brevet:
**02.11.2005 Bulletin 2005/44**

(51) Int Cl.⁷: **H04M 3/537**, H04M 3/54

(21) Numéro de dépôt: **01401990.5**

(22) Date de dépôt: **24.07.2001**

(54) **Protocole de transmission d'une information d'appel téléphonique urgent d'un abonné absent de son domicile.**

Übertragungsprotokoll für das Übermitteln einer dringenden Meldung an einem entfernten Benutzer

Transmission protocol for transmitting an urgent message warning to a distant user

(84) Etats contractants désignés:
**AT BE CH CY DE DK ES FI FR GB GR IE IT LI LU MC NL PT SE TR**

(30) Priorité: **27.07.2000 FR 0009856**

(43) Date de publication de la demande:
**30.01.2002 Bulletin 2002/05**

(73) Titulaire: **FRANCE TELECOM**
**75015 Paris (FR)**

(72) Inventeur: **Legay, Philippe**
**22700 Louannec (FR)**

(74) Mandataire: **Loisel, Bertrand**
**Cabinet Plasseraud**
**65/67 rue de la Victoire**
**75440 Paris Cedex 09 (FR)**

(56) Documents cités:
**US-A- 5 661 781**     **US-A- 5 828 740**

## Description

L'invention concerne un protocole de transmission d'une information d'appel téléphonique urgent d'un abonné absent de son domicile.

Avec la multiplication des systèmes de téléphonie cellulaire mobile, les utilisateurs des réseaux téléphoniques ont pris l'habitude d'un service permanent dans une zone de couverture totale pouvant atteindre au moins 80 % des territoires nationaux.

Le rôle du réseau téléphonique commuté demeure toutefois essentiel, dans la mesure où le domicile de tout abonné au réseau téléphonique commuté reste, nécessairement, un point de contact encore privilégié, pour tout appelant désireux d'établir un lien téléphonique avec ce dernier, ou même avec l'un des proches ou l'environnement personnel de ce dernier, en général en mesure de réorienter les initiatives d'appel de cet appelant.

Toutefois, le problème de la réorientation des initiatives d'appel d'un appelant demeure un problème majeur, non ou mal résolu, lorsque l'abonné, absent de son domicile, est en déplacement mais qu'il désire toutefois garder un lien minimum avec celui-ci, en cas de situations exceptionnelles, telles que situation de vacances, dans lesquelles les proches de cet abonné sont également absents du même domicile, ou autres situations.

A l'heure actuelle, il existe des solutions susceptibles de permettre la transmission d'un message urgent à une personne abonnée au réseau téléphonique commuté, mais momentanément absente de son domicile, lieu permanent de souscription de son abonnement.

Parmi ces solutions, une première solution consiste à prendre contact avec cet abonné absent par l'intermédiaire du radio téléphone mobile, lorsque cet abonné absent est toutefois titulaire d'un terminal de téléphonie mobile.

Bien que le nombre d'abonnements au réseau de téléphonie mobile soit en nette augmentation, une partie importante des populations des pays industrialisés n'est toutefois pas équipée. En outre, les abonnements au réseau de téléphonie mobile sont le plus souvent des abonnements circonscrits à un périmètre national. Un abonné au réseau de téléphonie mobile voyageant à l'étranger, en période de vacances par exemple, ne peut, dans ces conditions, utiliser ni donc être atteint par l'intermédiaire de son terminal de téléphonie mobile.

Enfin, pour tenter d'atteindre une personne titulaire d'un terminal de téléphonie mobile, tout appelant, ne disposant pas, le plus souvent, d'un annuaire de téléphones mobiles, doit impérativement connaître le numéro d'appel de ce dernier. Tel n'est généralement pas le cas en raison de la réticence naturelle des individus à mémoriser plusieurs numéros d'appel relatifs à une même personne, physique ou morale.

En conséquence, l'utilisation du réseau de téléphonie mobile pour transmettre un message urgent ne concerne en définitive qu'une faible partie de la population. Cette partie est encore plus limitée lorsque l'appelé est en déplacement hors du territoire national.

Une deuxième solution consiste, pour l'appelant, à laisser son message sur la boîte vocale ou le répondeur du domicile de l'appelé. Dans un tel cas, l'abonné absent appelé ne sera finalement averti que, soit lorsqu'il rentrera de son déplacement à son domicile, soit s'il consulte sa messagerie à distance. Il est toutefois probable que cette deuxième possibilité ne soit pas utilisée si cet abonné absent n'attend aucun appel téléphonique important ou s'il se trouve en vacances.

Dans ces conditions, le caractère d'urgence de la transmission du message devient aléatoire et n'est finalement fonction que de la proximité de la date de retour de déplacement de l'abonné absent ou celle du dépôt du message. Cette solution n'est donc pas satisfaisante.

US 5 661 781 divulgue un procédé pour signaler à un abonné absent le dépôt de messages à son attention sur un serveur de messagerie. Toutefois, ce procédé ne permet pas un traitement différencié des messages urgents.

La présente invention a en particulier pour objet de remédier aux inconvénients des solutions proposées de l'art antérieur précitées.

En particulier, l'objet de la présente invention est la mise en oeuvre d'un protocole de transmission d'une information d'appel téléphonique urgent d'un abonné absent de son domicile, dans lequel, contrairement aux solutions connues de l'art antérieur dans lesquelles l'abonné absent appelé doit impérativement quérir l'information hypothétique par appel de son domicile, ou de sa boîte vocale, l'information d'appel téléphonique urgent, destinée à cet abonné absent, est acheminée à destination de cet abonné absent, lors de toute utilisation d'un poste téléphonique du réseau téléphonique commuté par ce dernier.

Dans ces conditions, le protocole de transmission d'une information d'appel téléphonique urgent, d'un abonné absent de son domicile, par un appelant, objet de la présente invention, cet abonné absent étant muni d'une carte d'appel téléphonique dédiée contenant au moins une référence de numéro d'appel téléphonique du domicile de cet abonné, est remarquable en ce qu'il consiste au moins, à émettre un appel, par cet appelant, d'un site serveur de messages urgents, à émettre un message d'accueil vers cet appelant, en raison de l'absence de cet abonné, ce message d'accueil invitant ledit appelant à laisser un message d'appel urgent, à vérifier l'existence, pour cet abonné absent, d'une carte d'appel téléphonique dédiée, et, sur vérification de cette existence, et suite au dépôt de ce message urgent, puis sur toute utilisation de ladite carte d'appel téléphonique dédiée par cet abonné absent, en vue d'un appel téléphonique à partir d'un site distant, distinct du domicile de cet abonné absent, à vérifier, au niveau du système serveur de message urgent, l'existence ou la non-existence d'un message urgent à l'attention de cet abonné absent, à partir de la référence de numéro téléphonique de cet abonné absent et de ce message d'appel urgent, et, sur existence d'une information d'appel urgent, à transmettre à cet abonné absent, vers le site d'appel téléphonique distant, l'information d'appel urgent, ce qui permet à cet abonné absent de consulter ce message urgent déposé par appel téléphonique, à partir du site d'appel téléphonique distant.

Le protocole de transmission d'une information d'appel téléphonique urgent d'un abonné absent de son domicile, objet de la présente invention, trouve application à la gestion de tout abonnement au réseau téléphonique commuté disposant d'au moins un numéro d'appel.

Il sera mieux compris à la lecture de la description et à l'observation des dessins ci-après dans lesquels :

- la figure 1 représente, à titre illustratif, un organigramme relatif aux étapes de mise en oeuvre du protocole objet de la présente invention ;
- la figure 2a représente un détail de mise en oeuvre spécifique, relatif au dépôt d'un message urgent, lorsque l'abonné appelé absent est abonné à un service de messagerie en réseau ;
- la figure 2b représente un exemple de mise en oeuvre spécifique, relatif au dépôt d'un message urgent, lorsque l'abonné appelé absent n'est pas abonné à un service de messagerie en réseau ;
- la figure 3a représente, à titre illustratif, un détail de mise en oeuvre du protocole objet de la présente invention relatif aux différentes étapes mises en oeuvre lors de la consultation indirecte d'un message urgent par l'abonné absent appelé à partir d'un appel quelconque de ce dernier sur site distant ;
- la figure 3b représente, à titre purement illustratif, une procédure spécifique de consultation d'un message urgent par un abonné absent.

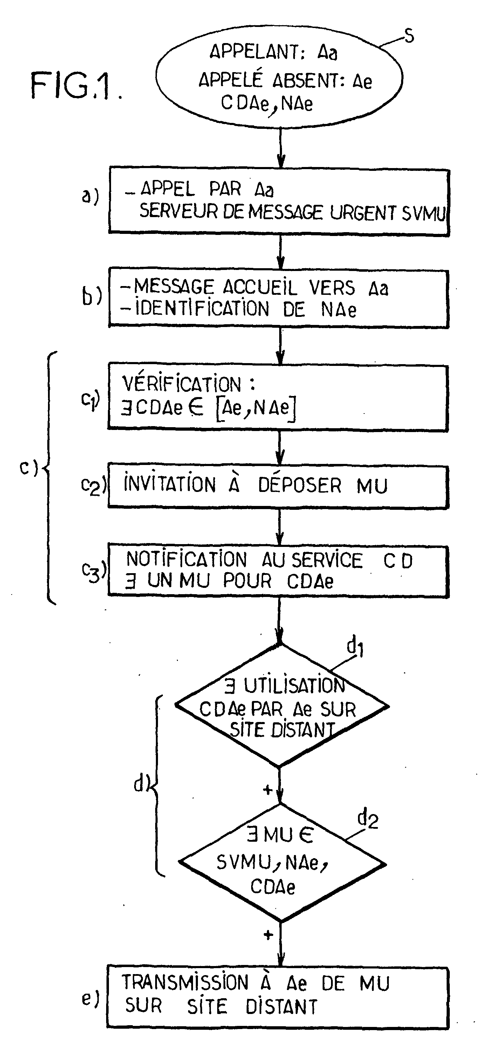

Une description plus détaillée du protocole de transmission d'une information d'appel téléphonique urgent d'un abonné absent de son domicile, conforme à l'objet de la présente invention, sera maintenant donnée en liaison avec la figure 1 et les figures suivantes.

D'une manière générale, on indique que le protocole objet de la présente invention peut être mis en oeuvre selon deux modes de réalisation différents, selon que l'abonné absent appelé est abonné ou non à un service de messagerie en réseau, tel que le service *Top message* distribué en France par la demanderesse.

Lorsque l'abonné absent appelé est abonné à un tel service, le point d'accès pour déposer un message urgent peut être constitué par le service de messagerie vocale en réseau auquel l'abonné absent appelé est abonné.

Lorsque, au contraire, l'abonné appelé absent n'est pas abonné à un tel service, le point d'accès pour déposer un message urgent pour l'appelant peut être constitué par un serveur spécifique accessible par un numéro d'appel téléphonique spécifique spécialement dédié pour recevoir les appels relatifs à des dépôts de messages urgents.

Le protocole de transmission d'une information d'appel téléphonique urgent d'un abonné absent de son domicile, objet de la présente invention, sera tout d'abord décrit en liaison avec la figure 1 indépendamment de l'un et l'autre des cas précédemment cités.

En référence à la figure 1, on part d'une position de départ, notée S, dans laquelle un appelant, noté Aa, lance un appel téléphonique vers un abonné absent appelé, noté Ae, cet abonné pouvant être absent de son domicile pour toute raison, professionnelle ou non professionnelle. L'abonné absent Ae est réputé disposer d'une carte d'appel téléphonique dédiée, CDAe, contenant au moins une référence de numéro d'appel téléphonique du domicile, cette référence de numéro d'appel téléphonique du domicile de cet abonné absent étant notée NAe et désignant soit cette référence, soit le numéro d'appel téléphonique du domicile de cet abonné absent par exemple.

D'une manière générale, on indique que la carte d'appel téléphonique dédiée peut correspondre à une carte, telle que la carte commercialisée par la société FRANCE TELECOM en France et désignée par carte FRANCE TELECOM, cette carte contenant au moins une référence de numéro d'appel téléphonique du domicile de cet abonné, l'abonné absent en l'occurrence, et le cas échéant, une ou plusieurs applications implantées dans cette carte d'appel téléphonique dédiée, ces applications pouvant par exemple permettre la facturation d'appels téléphoniques sur sites distants par cet abonné au numéro d'appel téléphonique NAe du domicile de cet abonné par exemple. Ce type de carte d'appel téléphonique dédiée ne sera pas décrit en détail car il correspond en fait à une carte d'appel téléphonique normalement disponible dans le commerce.

Conformément au protocole de transmission d'une information d'appel téléphonique urgent, objet de la présente invention, on indique que suite à la situation de départ S précédemment décrite, l'appelant Aa ayant lancé un appel téléphonique vers l'appelé Ae absent de son domicile, le protocole objet de la présente invention permet à l'appelant Aa de déposer s'il le souhaite un message urgent MU à l'attention de l'abonné absent de son domicile Ae.

Dans ce but, ainsi que représenté en figure 1, le protocole objet de l'invention consiste, en une étape a), à émettre un appel par l'appelant Aa d'un site serveur de gestion de messages urgents, ce site étant noté SVMU.

L'étape a) est suivie d'une étape b) consistant à émettre un message d'accueil vers cet appelant Aa en raison de l'absence de l'abonné, ce message d'accueil ayant bien entendu pour objet d'inciter l'appelant à laisser un message d'appel urgent sur un système serveur de messages urgents, le serveur SVMU.

Le message d'accueil vers l'appelant Aa peut être suivi d'une étape d'identification du numéro d'appel NAe de l'abonné absent Ae précédemment mentionné.

L'étape b) précitée est alors suivie d'une étape c) consistant essentiellement à vérifier l'existence pour l'abonné absent Ae d'une carte d'appel téléphonique dédiée et, sur vérification de cette existence, et suite au dépôt du message urgent MU, puis sur toute utilisation de la carte d'appel téléphonique dédiée, notée CDAe, par l'abonné absent Ae, en vue d'un appel téléphonique quelconque à partir d'un site distant distinct du domicile de l'abonné absent, à appeler une étape d) consistant à vérifier, au niveau du système serveur SVMU, l'existence ou la non-existence d'un message urgent MU à l'attention de l'abonné absent Ae. On indique que la vérification à l'étape d) de l'existence ou de la non-existence d'un message urgent peut avantageusement être effectuée à partir de la référence de numéro téléphonique de l'abonné absent NAe et du message d'appel urgent MU.

Sur existence d'une information et d'un message d'appel urgent MU dans les conditions précitées, le protocole objet de la présente invention consiste à transmettre à l'abonné absent Ae vers le site d'appel téléphonique distant l'information d'appel urgent. Ceci permet à l'abonné absent Ae de consulter le message urgent déposé par appel téléphonique à partir du site d'appel téléphonique distant.

Différentes variantes de mise en oeuvre préférentielle des étapes c) et d) seront maintenant décrites en liaison avec la même figure 1. En ce qui concerne l'étape c) visant à vérifier l'existence pour l'abonné absent Ae d'une carte d'appel téléphonique dédiée, l'opération de vérification peut être effectuée en une sous-étape $c_1$) cette opération de vérification étant notée :

$$\exists \ CDAe \in [Ae, Nae]$$

L'opération de vérification précitée implique en fait la vérification de l'existence d'une carte dédiée CDAe au nom de l'abonné absent appelé Ae et de l'association de cette carte dédiée à cet abonné absent appelé Ae et au numéro d'appel téléphonique du domicile de ce dernier NAe.

La sous-étape $c_1$) peut alors être suivie d'une sous-étape $c_2$) consistant en une invitation pour l'appelant Aa à déposer le message urgent MU.

La sous-étape $c_2$) est alors suivie d'une sous-étape $c_3$) consistant à notifier au service de carte d'appel téléphonique dédiée l'existence d'un message urgent associé à la carte d'appel téléphonique dédiée CDAe.

En ce qui concerne la mise en oeuvre de l'étape d) représentée en figure 1, on indique que celle-ci peut consister avantageusement en la mise en oeuvre d'une première sous-étape, notée $d_1$), consistant à vérifier l'utilisation de la carte d'appel téléphonique dédiée CDAe par l'abonné absent Ae sur le site distant. On comprend en particulier que la sous-étape $d_1$) peut être mise en oeuvre à partir de tout site distant lors de l'utilisation d'une carte dédiée CDAe par appel systématique du service de carte dédiée auquel la notification de l'existence d'un message urgent a été notifiée à la sous-étape $c_3$) précédente.

La sous-étape $d_1$) est alors suivie d'une sous-étape $d_2$) sur réponse positive à la sous-étape $d_1$) consistant à effectuer une vérification effective au niveau du système serveur de l'existence ou de la non-existence d'un message urgent à l'attention de l'abonné absent. Cette opération est notée à la sous-étape $d_2$) :

$$\exists \ MU \in SVMU, \ Nae, \ CDAe.$$

Par cette relation, on indique que le serveur de message urgent SVMU dispose bien d'un message urgent MU destiné au numéro d'appel téléphonique NAe de l'abonné appelé absent Ae, lequel dispose de la carte dédiée CDAe.

Sur réponse positive à la sous-étape $d_2$) et donc à l'étape d) sur existence d'une information d'appel urgent, l'étape e) précédemment décrite, consistant en la transmission à l'abonné absent du message urgent MU sur le site distant, est alors effectuée.

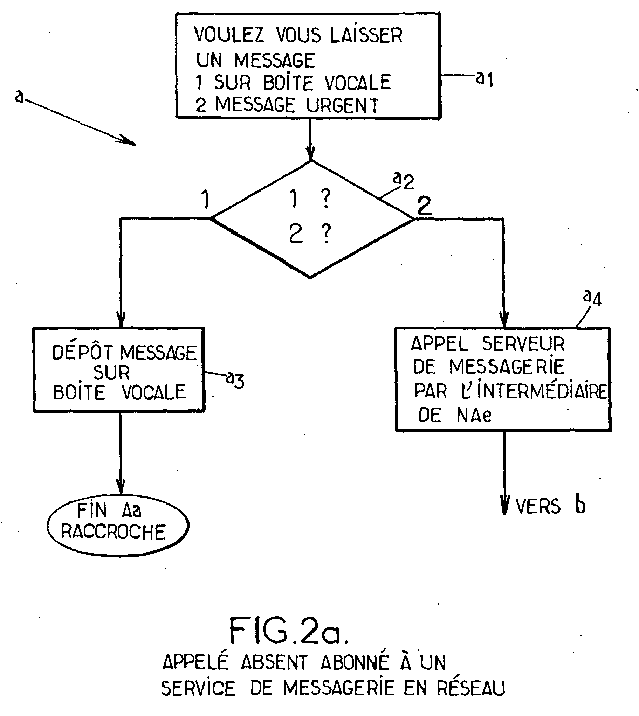

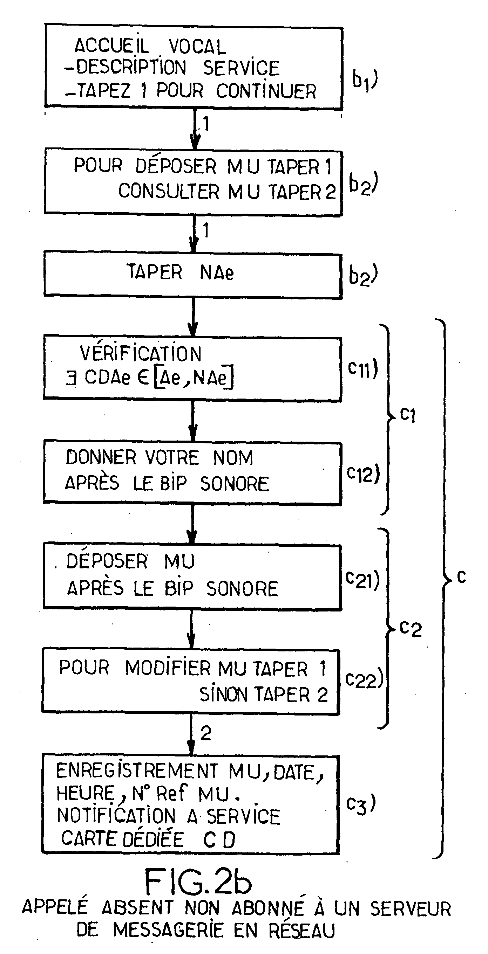

Un mode de mise en oeuvre spécifique préférentiel correspondant à la situation dans laquelle l'appelé absent Ae est abonné à un service de messagerie en réseau, tel que le service *Top message* précédemment cité, sera maintenant décrit en liaison avec la figure 2a.

La figure 2a représente en fait un mode de réalisation non limitatif de l'étape a) de la figure 1.

Conformément à la situation correspondante précédemment décrite, l'appelant Aa n'ayant pas reçu de réponse à son appel de l'abonné absent Ae et ce dernier étant en outre abonné au service de messagerie en réseau, le protocole objet de la présente invention permet d'utiliser les diverses fonctionnalités du service de messagerie en réseau précité.

En particulier, en une sous-étape $a_1$), l'appelant Aa entend un message d'accueil lui proposant, soit de laisser un message sur la boîte vocale de l'appelé absent Ae, soit, au contraire, et dans le cas où l'appelant Aa estime qu'il existe un caractère d'urgence majeure, un message urgent MU, lequel sera transmis à l'appelé absent Ae dès que celui-ci passera un appel téléphonique quelconque au moyen de sa carte dédiée CDAe depuis un site distant quelconque. La sous-étape $a_1$) peut ainsi comporter deux possibilités permettant à l'appelant de laisser un message :

1. sur boîte vocale
2. message urgent MU.

La sous-étape $a_1$) est suivie d'une sous-étape de test $a_2$) consistant à vérifier quelle est l'option retenue par l'appelant Aa. Sur réponse positive à l'option 1, l'appelant Aa ayant choisi le dépôt d'un message sur la boîte vocale de l'abonné absent Ae en raison du caractère non urgent de son message, la sous-étape $a_2$) est suivie d'une sous-étape $a_3$) dans laquelle l'appelant Aa se voit invité à déposer son message sur la boîte vocale de l'appelé absent Ae. Suite à cette opération, l'appelant Aa raccroche, le processus étant terminé.

Au contraire, dans le cas où l'appelant Aa choisit l'option 2 de dépôt d'un message urgent MU, la sous-étape $a_2$) est suivie d'une sous-étape $a_4$) consistant en une mise en relation automatique avec le serveur de message urgent SVMU.

La sous-étape $a_4$) peut alors être suivie de l'étape b) de la figure 1 par exemple.

Lorsque, au contraire, l'abonné absent Ae n'est pas abonné à un service de messagerie en réseau, l'étape a) de la figure 1, consistant à émettre un appel d'un site serveur de gestion de message urgent, peut consister en un appel direct par l'appelant Aa du site serveur de gestion de message urgent précité.

Un mode de réalisation particulier non limitatif dans cette situation est maintenant décrit en liaison avec la figure 2b.

Dans le cadre de la mise en oeuvre du protocole objet de la présente invention, dans la situation relative à la figure 2b, on indique qu'à l'étape a) de la figure 1, l'appelant Aa ayant constaté que l'appelé est absent, raccroche et appelle directement un serveur de message urgent SVMU par l'intermédiaire d'un numéro d'appel téléphonique dédié par exemple.

A la suite de l'étape a) précitée, l'étape b), telle que représentée en figure 1, peut être mise en oeuvre par la succession de trois sous-étapes $b_1$), $b_2$) et $b_3$) par exemple.

La sous-étape $b_1$) consiste en un message d'accueil vocal contenant une description du service de message urgent par exemple et incitant l'appelant Aa à taper sur une touche, la touche 1 par exemple, pour continuer.

Sur appui de la touche précitée, une sous-étape $b_2$) est appelée, invitant l'appelant Aa à déposer un message urgent MU en tapant le 1. L'appelé Ae peut également accéder au serveur de message urgent SVMU pour reconsulter un message urgent MU en tapant le 2.

Sur sélection du 1, l'appelant Aa ayant choisi de déposer un message urgent MU, une sous-étape $b_3$) est appelée, invitant l'appelant Aa à taper le numéro d'appel téléphonique NAe de l'abonné absent Ae.

L'étape b) de la figure 1 est alors suivie de l'étape c) consistant en sous-étapes $c_1$), $c_2$) et $c_3$) telles que décrites en figure 1.

La sous-étape $c_1$) peut être constituée par une première sous-étape élémentaire $c_{11}$) de vérification proprement dite, conformément à la vérification effectuée à la sous-étape $c_1$) de la figure 1, à la sous-étape élémentaire $c_{11}$) étant en outre ajoutée une sous-étape élémentaire $c_{12}$) invitant l'appelant Aa à donner son nom après le bip sonore. La sous-étape $c_1$) est alors suivie de la sous-étape $c_2$), laquelle elle-même peut être subdivisée en une première sous-étape élémentaire $c_{21}$) invitant l'appelant Aa à déposer le message urgent MU après le bip sonore et suivie d'une sous-étape élémentaire $c_{22}$) permettant à l'appelant Aa, soit de modifier son message urgent MU en tapant une première option 1, soit de poursuivre en tapant une deuxième option 2.

Sur sélection de l'option 2 par l'appelant Aa, la sous-étape $c_2$) étant ainsi terminée, la sous-étape $c_3$) peut être mise en oeuvre, cette étape, outre la notification au serveur de carte dédiée CD de l'existence d'un message urgent pour la carte dédiée CDAe attribuée à l'abonné absent Ae, pouvant comporter bien entendu l'enregistrement du message urgent MU, de la date de cet enregistrement, de l'heure et d'un numéro de référence de message urgent par exemple. Bien entendu, l'étape $c_3$) comprend la notification au service carte dédiée CD.

En ce qui concerne la mise en oeuvre de l'étape c) telle que décrite en liaison avec la figure 2b, on indique que celle-ci peut être réalisée également dans le cadre de la mise en oeuvre du protocole objet de la présente invention lorsque l'appelé absent est abonné à un service de messagerie en réseau.

On constate ainsi que les deux solutions décrites en liaison avec les figures 2a et 2b diffèrent seulement par la manière d'accéder au service, soit de manière indirecte, par l'intermédiaire du numéro d'appel téléphonique de l'abonné absent NAe, soit de manière directe, par appel d'un numéro d'appel téléphonique du serveur de message urgent SVMU.

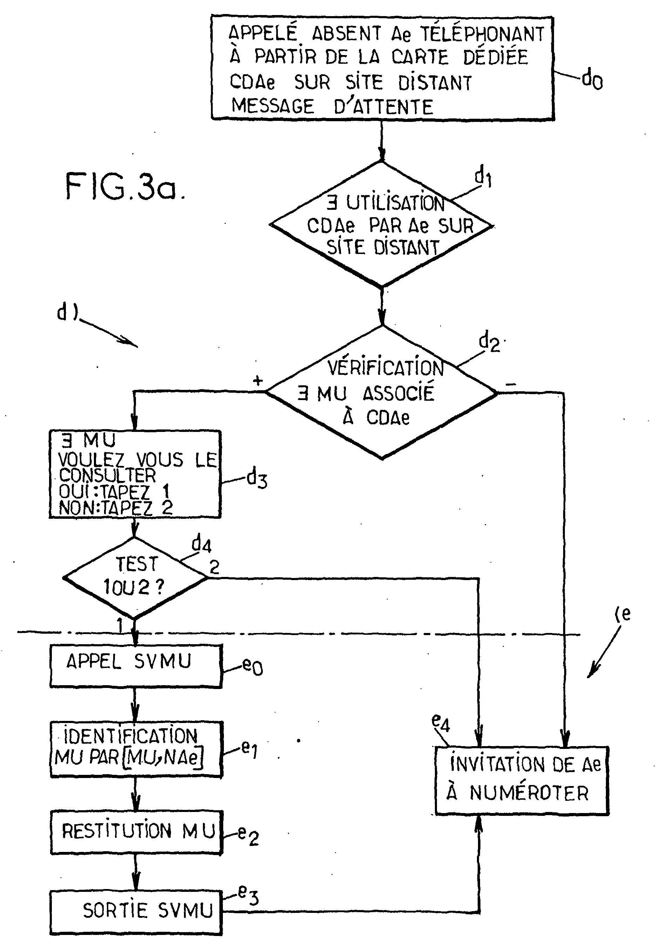

Une description plus détaillée des étapes de mise en oeuvre du protocole objet de la présente invention par l'abonné absent Ae lors d'un appel téléphonique quelconque de ce dernier sur un site distant en faisant usage d'une carte dédiée CDAe sera maintenant donnée en liaison avec la figure 3a.

En référence à la figure précitée, on indique qu'on part de la situation $d_0$), dans laquelle l'appelé absent Ae lance un appel téléphonique quelconque à partir de la carte dédiée CDAe sur un site distant de son domicile en raison de son absence de ce dernier.

La situation $d_0$) est suivie des sous-étapes $d_1$) et $d_2$) telles que représentées en figure 1.

Ainsi que représenté sur la figure 3a précitée, sur réponse négative à la sous-étape $d_2$), aucun message urgent n'étant associé à la carte dédiée CDAe dont l'abonné absent Ae est titulaire, la sous-étape $d_2$) est suivie d'une étape $e_4$) consistant en une invitation sur le site distant de l'abonné absent Ae à procéder à la numérotation de son appel téléphonique quelconque.

Au contraire, sur réponse positive à la sous-étape $d_2$), l'étape de transmission à l'abonné absent Ae du message urgent sur le site distant, étape e) de la figure 1, peut être précédée d'une sous-étape $d_3$) avertissant l'abonné absent Ae de l'existence d'un message urgent MU et de la production d'un message, sonore ou autre, adressé à l'abonné absent Ae invitant ce dernier, soit à taper un chiffre, le chiffre 1 pour consulter ce message, soit à taper le chiffre 2 dans le cas contraire.

La sous-étape $d_3$) est suivie d'une étape de test $d_4$) consistant à vérifier la valeur choisie par l'abonné absent Ae.

Dans le cas où l'abonné absent choisit de ne pas consulter le message, la valeur 2 ayant été tapée, la sous-étape de test $d_4$) est suivie de la sous-étape $e_4$) d'invitation de l'abonné absent Ae à numéroter l'appel téléphonique quelconque souhaité.

Au contraire, dans le cas où l'abonné absent Ae souhaite consulter le message urgent, la valeur 1 ayant été introduite par ce dernier, la sous-étape de test $d_4$) est alors suivie d'une étape $e_0$) consistant à appeler à partir du site distant le service de message urgent SVMU.

L'étape $e_0$) est elle-même suivie d'une étape $e_1$) consistant, au niveau du serveur, à identifier le message urgent MU à partir bien entendu du message urgent précité et du numéro d'appel téléphonique NAe associé à ce message urgent ainsi que de la référence d'appel téléphonique contenue dans la carte dédiée CDAe lue sur le site distant.

A la sous-étape $e_1$), l'identification est notée :
Identification MU par [MU, NAe]

La sous-étape $e_1$) est alors suivie d'une étape $e_2$), dite de restitution du message MU, laquelle consiste en fait à transmettre, à partir du serveur de message SVMU, le message urgent MU vers le site distant à partir duquel l'abonné absent Ae a initié son appel téléphonique quelconque.

Le message urgent MU ayant été obtenu par l'abonné absent Ae suite à l'exécution de la sous-étape $e_2$), cette dernière est suivie de l'exécution d'une sous-étape $e_3$) de sortie du serveur de message urgent.

La sous-étape $e_3$) est elle-même suivie de l'appel de l'étape $e_4$) d'invitation de l'abonné absent Ae à numéroter son appel téléphonique quelconque.

A l'observation de la figure 3a, on constate que préalablement à l'étape effective d) consistant à vérifier l'existence d'une information d'appel urgent, c'est-à-dire en fait à l'exécution des sous-étapes $d_1$) et $d_2$), le protocole objet de l'invention peut consister, au niveau du site d'appel téléphonique distant, dès la réalisation des opérations de contrôle d'accès et d'authentification de l'utilisateur de la carte dédiée à partir de la composition du numéro de la carte dédiée par exemple, au niveau du site d'appel téléphonique distant, à suspendre pendant une durée déterminée correspondant à la vérification précitée, toute opération d'appel téléphonique quelconque par l'abonné absent Ae, l'invitation de l'abonné absent Ae à numéroter n'étant effectuée qu'à la sous-étape $e_4$), ainsi que mentionné précédemment dans la description.

De préférence, à l'étape $d_0$), un message d'attente peut être produit à l'attention de l'abonné absent Ae sur le site d'appel téléphonique distant.

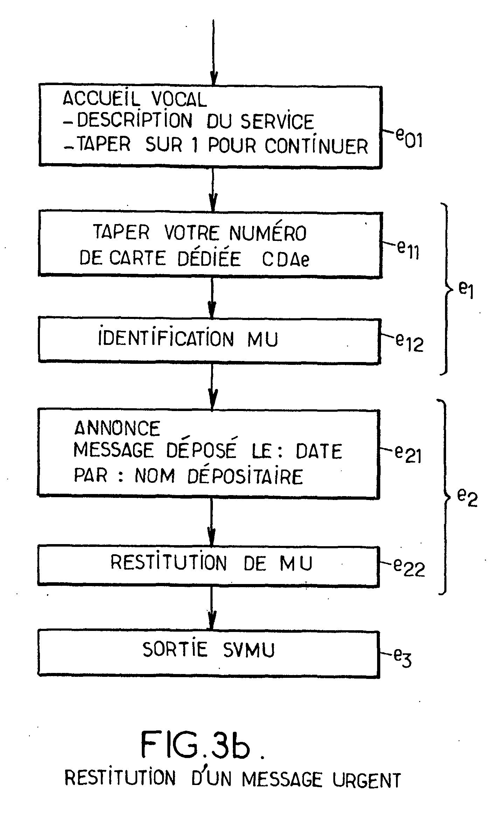

Enfin, un mode de réalisation préférentiel non limitatif de la procédure de consultation d'un message urgent MU, c'est-à-dire de l'exécution des étapes $e_0$), $e_1$), $e_2$) et $e_3$) de la figure 3a, sera maintenant décrit en liaison avec la figure 3b.

Ainsi que représenté sur la figure précitée, la sous-étape $e_0$) d'appel sur service de message urgent SVMU peut être suivie d'une sous-étape élémentaire $e_{01}$) d'accueil vocal et de description du service à l'attention de l'abonné absent Ae, ce dernier, suite à la description du service, pouvant être invité à taper sur une touche 1 pour continuer. La sous-étape élémentaire $e_{01}$) est alors suivie de l'étape $e_1$), laquelle peut consister en une sous-étape élémentaire $e_{11}$) invitant l'abonné absent Ae à taper le numéro de la carte dédiée CDAe si ce numéro n'a pas encore été introduit.

La sous-étape élémentaire $e_{11}$) est suivie d'une sous-étape élémentaire $e_{12}$) permettant d'effectuer l'identification de tout message urgent MU associé, au niveau du serveur de message urgent, à la carte dédiée CDAe précédemment citée. Cette opération d'identification correspond à celle indiquée à la sous-étape $e_1$) de la figure 3a.

La sous-étape $e_2$) est alors appelée, cette sous-étape pouvant consister elle-même en une sous-étape élémentaire $e_{21}$) consistant en une annonce vocale "message déposé le", indiquant la date de dépôt du message urgent, et le nom du dépositaire. La sous-étape élémentaire $e_{21}$) est alors suivie d'une sous-étape élémentaire $e_{22}$) consistant à diffuser, à partir d'un enregistrement du message urgent MU, le message urgent précité. La sous-étape élémentaire $e_{22}$) correspond à l'exécution de la sous-étape $e_2$) de la figure 3a.

La sous-étape $e_2$) ayant ainsi été exécutée, cette dernière est alors suivie de la sous-étape $e_3$) de sortie du serveur de message urgent, telle que décrite précédemment en liaison avec la figure 3a.

On a ainsi décrit un protocole de transmission d'une information d'appel téléphonique urgent d'un abonné absent de son domicile par un appelant, grâce auquel des prestations particulièrement performantes peuvent être fournies.

En effet, le protocole objet de l'invention donne la possibilité à un appelant de laisser un message urgent à destination de l'abonné en déplacement hors de son domicile. Le message urgent est traité différemment de ceux laissés habituellement sur la messagerie vocale ou sur le répondeur de l'appelé absent. En effet, une procédure d'avertissement est engendrée vers l'abonné absent muni d'une carte dédiée, cette procédure d'avertissement étant initiée indépendamment de tout appel téléphonique de l'abonné absent à son domicile. Ce mode opératoire permet bien entendu de réduire le temps de communication d'un message urgent à l'abonné absent dans la mesure où ce dernier, sur simple appel téléphonique quelconque, distinct de l'appel téléphonique de son domicile, peut être alors informé grâce au protocole objet de la présente invention.

Enfin, le protocole objet de l'invention donne la possibilité à l'abonné absent d'être averti, dès que ce dernier utilise sa carte dédiée, de l'existence d'un message urgent à son attention. L'abonné absent a alors la possibilité de consulter le message urgent précité.

Le protocole objet de la présente invention apporte ainsi à l'abonné absent itinérant la garantie d'être averti en cas d'urgence sans que toutefois ce dernier ait à consulter à distance la totalité de sa boîte vocale. En effet, l'intérêt de consulter une boîte vocale, en particulier lorsque l'abonné absent se trouve en villégiature, apparaît particulièrement moindre car la plupart des messages sur répondeur n'ont pas de caractère d'urgence.

Grâce à la mise en oeuvre du protocole objet de la présente invention, l'information relative à l'existence d'un message urgent, et bien entendu le message urgent, vont directement au voyageur en l'absence d'initiative de ce dernier. Un tel processus, grâce à la mise en oeuvre du protocole objet de l'invention, apparaît particulièrement sécurisant.

**Revendications**

1. Protocole de transmission d'une information d'appel téléphonique urgent, d'un abonné absent de son domicile, par un appelant, cet abonné absent étant muni d'une carte d'appel téléphonique dédiée contenant au moins une référence de numéro d'appel téléphonique du domicile de cet abonné, **caractérisé en ce qu'**il consiste au moins :

   a) à émettre un appel, par cet appelant, de façon à laisser un message audit abonné ;

   a') à détecter un type du message à laisser audit abonné, et, lorsque ladite détection indique que le message est un message d'appel urgent :

   a") à transmettre ledit appel à un site serveur de gestion de messages urgents ;

   b) à émettre un message d'accueil, vers cet appelant, en raison de l'absence de cet abonné, ce message d'accueil incitant ledit appelant à laisser un message d'appel urgent, sur un système serveur de message urgent ;

   c) à vérifier l'existence, pour cet abonné absent, d'une carte d'appel téléphonique dédiée, et, sur vérification de cette existence, et, suite au dépôt de ce message urgent, puis, sur toute utilisation de ladite carte d'appel téléphonique dédiée par cet abonné absent, en vue d'un appel téléphonique à partir d'un site distant, distinct du domicile de cet abonné absent,

   d) à vérifier, au niveau dudit système serveur, l'existence ou la non-existence d'un message urgent à l'attention de cet abonné absent, à partir de ladite référence de numéro téléphonique de cet abonné et de ce message d'appel urgent ; et, sur existence d'une information d'appel urgent,

   e) à transmettre à cet abonné absent, vers le site d'appel téléphonique distant, ladite information d'appel urgent, ce qui permet à cet abonné absent de consulter ledit message urgent déposé par appel téléphonique, à partir du site d'appel téléphonique distant.

2. Protocole selon la revendication 1, **caractérisé en ce que**, l'étape a) consistant à émettre un appel destiné à laisser un message audit abonné consiste en un appel d'un service de messagerie en réseau par l'intermédiaire du numéro d'appel téléphonique dudit abonné absent.

3. Protocole selon la revendication 2, dans lequel, en réponse à l'appel d'un service de messagerie en réseau, celui-ci consiste en la production d'un message d'invitation à effectuer un dépôt de message urgent.

4. Protocole selon une des revendications 1 à 3, **caractérisé en ce que**, préalablement à l'étape d) consistant à vérifier l'existence d'une information d'appel urgent, ledit protocole consiste, au niveau dudit site d'appel téléphonique distant :

   - à suspendre, pendant une durée déterminée correspondant à cette vérification, toute opération d'appel téléphonique quelconque par ledit abonné absent, à partir du site d'appel téléphonique distant ;

   - à produire sur le site d'appel téléphonique distant un message d'attente à l'attention dudit abonné absent.

**Patentansprüche**

1. Übertragungsprotokoll für das Übermitteln einer dringenden Telefonmeldung an einen von seinem Heim abwesenden Teilnehmer von einem Anrufer, wobei dieser abwesende Teilnehmer mit einer dedizierten Telefonrufkarte ausgestattet ist, die mindestens einen Verweis auf die Rufnummer des Heims dieses Teilnehmers enthält, **gekennzeich-**

**net durch** mindestens folgende Schritte:

a) Senden eines Rufs **durch** diesen Anrufer, um diesem Teilnehmer eine Meldung zu hinterlassen;

a') Erkennen einer Art der dem Teilnehmer zu hinterlassenden Meldung und wenn die Erkennung anzeigt, daß die Meldung eine dringende Rufmeldung ist:

a") Übertragen des Anrufs zu einem Standort eines Servers zur Verwaltung von dringenden Nachrichten;

b) Aussenden einer Begrüßungsnachricht zu diesem Anrufer aufgrund der Abwesenheit dieses Teilnehmers, wobei diese Begrüßungsnachricht den Anrufer dazu bewegt, eine dringende Rufmeldung auf einem Serversystem für dringende Meldungen zu hinterlassen;

c) Überprüfen des Vorhandenseins für diesen abwesenden Teilnehmer einer dedizierten Telefonrufkarte und bei Bestätigung dieses Vorhandenseins und nach Abgabe dieser dringenden Meldung, bei jeglicher Benutzung dieser dedizierten Telefonrufkarte **durch** diesen abwesenden Teilnehmer, im Hinblick auf einen Telefonruf von einem entfernten Standort, der sich vom Heim dieses abwesenden Teilnehmers unterscheidet,

d) Überprüfen, auf der Ebene des Serversystems, des Vorhandenseins oder des Nichtvorhandenseins einer dringenden Meldung für diesen abwesenden Teilnehmer, aufgrund des Verweises der Telefonnummer dieses Teilnehmers und dieser dringenden Rufmeldung; und bei Vorhandensein einer dringenden Rufinformation,

e) Übertragen zu diesem abwesenden Teilnehmer zu dem entfernten Telefonrufstandort der dringenden Rufinformation, was diesem abwesenden Teilnehmer erlaubt, die hinterlegte dringende Meldung **durch** Telefonruf von dem entfernten Telefonrufstandort aus abzufragen.

**2.** Protokoll nach Anspruch 1, **dadurch gekennzeichnet, daß** der Schritt a), bestehend aus dem Senden eines Rufs zum Hinterlassen einer Meldung für den Teilnehmer, aus einem Ruf eines Nachrichtenübermittlungsdienstes im Netz über die Telefonrufnummer des abwesenden Teilnehmers umfasst.

**3.** Protokoll nach Anspruch 2, in dem als Reaktion auf einen Ruf eines Nachrichtenübermittlungsdienstes im Netz, dieser aus der Erzeugung einer Aufforderungsnachricht zum Bewirken einer Hinterlegung der dringenden Meldung besteht.

**4.** Protokoll nach einem der Ansprüche 1 bis 3, **dadurch gekennzeichnet, daß**, vorzugsweise in Schritt d), der aus der Überprüfung des Vorhandenseins einer dringenden Rufinformation besteht, das Protokoll auf der Ebene des entfernten Telefonrufstandorts aus folgendem besteht:

- Aufheben während einer bestimmten, dieser Überprüfung entsprechenden Dauer jeglicher Telefonrufoperation durch den abwesenden Teilnehmer von dem entfernten Telefonrufstandort aus;

- Erzeugen an dem entfernten Telefonrufstandort einer Wartemeldung für den abwesenden Teilnehmer.

**Claims**

**1.** Protocol for transmitting urgent telephone call information to a subscriber who is absent from home, by a caller, the absent subscriber being equipped with a dedicated telephone card containing at least one telephone number reference of the home of the subscriber, **characterised in that** it comprises at least:

a) sending a call, by the caller, in order to leave a message for the subscriber;

a') detecting the type of message to be left for said subscriber and, when said detection indicates that the message is an urgent call message:

a") transmitting said call to a server site for managing urgent messages;

b) because the subscriber is absent, sending a greeting message to the caller, the greeting message prompting said caller to leave an urgent call message on an urgent message server system;

c) checking whether the absent subscriber possesses a dedicated telephone card, and if such a card exists, and after the urgent message has been left, then whenever said dedicated telephone card is used by the absent subscriber in order to make a telephone call from a remote site, separate from the home of the absent subscriber,

d) checking, at said server system, whether there is an urgent message for the attention of the absent subscriber, on the basis of said telephone number reference of the subscriber and the urgent call message; and, if there is urgent call information,

e) transmitting said urgent call information to the absent subscriber at the remote telephone call site, allowing the absent subscriber to consult said urgent message that has been left, by telephone call, from the remote telephone call site.

2. Protocol according to claim 1, **characterised in that** step a), which comprises sending a call in order to leave a message for said subscriber, comprises calling a network messaging service by way of the telephone number of said absent subscriber.

3. Protocol according to claim 2, in which, in response to the call from a network messaging service, the protocol comprises producing a message inviting the caller to leave an urgent message.

4. Protocol according to any one of claims 1 to 3, **characterised in that**, prior to step d), which comprises checking whether there is any urgent call information, said protocol comprises, at said remote telephone call site:

- suspending, for a predetermined period of time corresponding to that check, any telephone call operation by said absent subscriber from the remote telephone call site;

- producing at the remote telephone call site a waiting message for the attention of said absent subscriber.

**FIG.1.**

```
           ┌─────────────────────────┐
           │ APPELANT: Aa            ╱── S
           │ APPELÉ ABSENT: Ae       │
           │ CDAe, NAe              │
           └─────────────────────────┘
                        │
                        ▼
   a) │ ─ APPEL  PAR  Aa                      │
      │   SERVEUR DE MESSAGE URGENT SVMU      │
                        │
                        ▼
   b) │ ─ MESSAGE ACCUEIL VERS Aa            │
      │ ─ IDENTIFICATION DE NAe              │
                        │
                        ▼
   c₁)│ VÉRIFICATION :                        │
      │ ∃ CDAe ∈ [Ae, NAe]                   │
                        │
c)                      ▼
   c₂)│ INVITATION À DÉPOSER MU               │
                        │
                        ▼
   c₃)│ NOTIFICATION AU SERVICE  CD          │
      │ ∃ UN MU POUR CDAe                    │
                        │
                        ▼
              ◇ ∃ UTILISATION        ── d₁
                CDAe PAR Ae SUR
                 SITE DISTANT ◇
                        │ +
d)                      ▼
              ◇ ∃ MU ∈               ── d₂
                SVMU, NAe,
                  CDAe ◇
                        │ +
                        ▼
   e) │ TRANSMISSION À Ae DE MU              │
      │ SUR  SITE DISTANT                    │
```

VOULEZ VOUS LAISSER
UN MESSAGE
1 SUR BOÎTE VOCALE
2 MESSAGE URGENT — a1

a

1 ?
2 ?  — a2

1          2

DÉPÔT MESSAGE
SUR
BOÎTE VOCALE — a3

APPEL SERVEUR
DE MESSAGERIE
PAR L'INTERMÉDIAIRE
DE NAe — a4

FIN Aa
RACCROCHE

VERS b

# FIG.2a.

APPELÉ ABSENT ABONNÉ À UN
SERVICE DE MESSAGERIE EN RÉSEAU

ACCUEIL VOCAL
-DESCRIPTION SERVICE
-TAPEZ 1 POUR CONTINUER $b_1$)

$\downarrow$ 1

POUR DÉPOSER MU TAPER 1
CONSULTER MU TAPER 2 $b_2$)

$\downarrow$ 1

TAPER NAe $b_2$)

VÉRIFICATION
$\exists\ CDAe \in [Ae, \overline{NAe}]$ $c_{11}$)

$c_1$

DONNER VOTRE NOM
APRÈS LE BIP SONORE $c_{12}$)

DÉPOSER MU
APRÈS LE BIP SONORE $c_{21}$)

$c_2$

$c$

POUR MODIFIER MU TAPER 1
SINON TAPER 2 $c_{22}$)

$\downarrow$ 2

ENREGISTREMENT MU, DATE,
HEURE, N° Ref MU.
NOTIFICATION A SERVICE
CARTE DÉDIÉE C D $c_3$)

# FIG.2b
APPELÉ ABSENT NON ABONNÉ À UN SERVEUR
DE MESSAGERIE EN RÉSEAU

**FIG.3a.**

```
┌─────────────────────────────────┐
│ APPELÉ ABSENT Ae TÉLÉPHONANT    │
│ À PARTIR DE LA CARTE DÉDIÉE     │  d₀
│ CDAe SUR SITE DISTANT           │
│ MESSAGE D'ATTENTE               │
└─────────────────────────────────┘
```

∃ UTILISATION CDAe PAR Ae SUR SITE DISTANT — d₁

d )

VÉRIFICATION ∃ MU ASSOCIÉ À CDAe — d₂

```
┌──────────────────┐
│ ∃ MU             │
│ VOULEZ VOUS LE   │  d₃
│ CONSULTER        │
│ OUI:TAPEZ 1      │
│ NON:TAPEZ 2      │
└──────────────────┘
```

TEST 1OU2 ? — d₄

(e

```
┌──────────────┐
│ APPEL SVMU   │── e₀
└──────────────┘
```

```
┌────────────────────┐
│ IDENTIFICATION     │
│ MU PAR [MU,NAe]    │── e₁
└────────────────────┘
```

```
┌──────────────────┐
│ RESTITUTION MU   │── e₂
└──────────────────┘
```

```
┌──────────────┐
│ SORTIE SVMU  │── e₃
└──────────────┘
```

e₄

```
┌────────────────────┐
│ INVITATION DE Ae   │
│ À NUMÉROTER        │
└────────────────────┘
```

ACCUEIL VOCAL
- DESCRIPTION DU SERVICE
- TAPER SUR 1 POUR CONTINUER — $e_{01}$

TAPER VOTRE NUMÉRO
DE CARTE DÉDIÉE  CDAe — $e_{11}$

IDENTIFICATION MU — $e_{12}$

$\left.\begin{array}{c}\\\\\end{array}\right\} e_1$

ANNONCE
MESSAGE DÉPOSÉ LE: DATE
PAR : NOM DÉPOSITAIRE — $e_{21}$

RESTITUTION  DE M U — $e_{22}$

$\left.\begin{array}{c}\\\\\end{array}\right\} e_2$

SORTIE SVMU — $e_3$

# FIG.3b.
RESTITUTION D'UN MESSAGE URGENT